# EUROPEAN PATENT APPLICATION

(11) **EP 4 029 717 A1**
(43) Date of publication of application: **20.07.2022**
(21) Application number: 21151624.0
(22) Date of filing: 14.01.2021
(51) Int. Cl.: B60L 1/02, B60L 8/00, B60L 50/60, B60L 58/20, B60L 58/27, B60L 1/12

(54) **PRECONDITIONING SYSTEM AND METHOD FOR CONTROL OF TRACTION BATTERY PRECONDITIONING**

(71) Applicant: Vehtec AB, 431 53 Mölndal (SE)
(72) Inventor: NILSSON, Johan, 411 25 Göteborg (SE)
(74) Representative: Zacco Sweden AB

(57) **Abstract**

The present invention relates to a method (1) for controlling the preconditioning of at least one traction battery (201) of an electric vehicle (200), the method (1) comprising:
charging (101) an auxiliary battery (202) from at least one power source (203); estimating (102) the amount of auxiliary battery charge required to precondition the traction battery (201); obtaining (103) charge rate information indicative of at least one charge rate affecting property of said at least one power source (203), wherein said at least one charge rate affecting property includes weather forecasts, driving schedule of the vehicle, time of day, day of week, week of year, historical charge rate data, and/or said at least one power source's (203) output voltage, output current, and/or output power; estimating (104) a charge rate of the auxiliary battery (202) based on said charge rate information; comparing (105) the estimated amount of charge required to precondition the traction battery (201) with the estimated charge rate of the auxiliary battery (202) and allocating (106) an overcapacity thereof to the powering of at least one auxiliary system (204) of the vehicle (200).

## Description

### FIELD OF THE INVENTION

The present invention relates to a system and a method for control of electric vehicle traction battery preconditioning.

### BACKGROUND OF THE INVENTION

Electric vehicles of today are often if not always outfitted with a preconditioning unit configured to regulate the temperature of the traction battery of the vehicle. A traction battery operating at suboptimal temperature has its capacity, as well as its expected lifetime, greatly reduced. Thus, diesel powered preconditioning units are often provided to regulate the temperature of the traction battery. This means that even 100% electrically propelled vehicles often consume fossil fuel in order to precondition the traction battery, thereby generating environmentally harmful emissions.

Some electric vehicles power their preconditioning units by means of the traction battery itself. If the vehicle is not connected to a charge point during preconditioning, then the range of the electric vehicle is reduced accordingly. Consequently, the preconditioning can either not be guaranteed if the current charge of the traction battery is too low, or the electric vehicle traction battery might deplete itself while powering the preconditioning unit.

There is a need to replace diesel and gas preconditioning units in order to provide electric vehicles that consume no fossil fuel whatsoever. This would reduce the total amount of emissions of CO2 and particles from the transport sector. However, doing so means running into the abovementioned problems with depleted traction batteries or failure to provide preconditioning thereto.

### SUMMARY OF THE INVENTION

It is an object of the present invention to alleviate at least some of the mentioned drawbacks of the prior art and to provide a method for controlling an electric preconditioning unit and the electrically powered preconditioning of a traction battery. This and other objects, which will become apparent in the following, are accomplished by a system and a method for control of electric vehicle traction battery preconditioning as defined in the accompanying independent claims.

The term exemplary should in this application be understood as serving as an example, instance or illustration.

The present invention is at least partially based on the realisation that using an auxiliary battery and predicting the charge rate of the battery, as well as the power consumption of the preconditioning unit and any other auxiliary systems connected to the auxiliary battery, allows for better control of the preconditioning. By allocating a charge required to precondition the traction battery, the auxiliary battery may be utilized to power auxiliary systems such as cabin heaters, air conditioning units, seat heaters, etc. The present invention also predicts the charge rate of the auxiliary battery based on route information, weather information, and other charge rate affecting properties. This is especially important when using a solar panel array as a power source for the charging of the auxiliary battery. This is beneficial as a better utilization of the auxiliary battery charge is enabled by also allowing future charge levels to be allocated to the preconditioning unit, thus freeing up current charge levels for use by the auxiliary systems.

The present invention is furthermore based on the realisation that providing a system that may be retrofitted onto existing electric vehicles is beneficial as it simplifies the transition from electrically propelled vehicle to fully electric vehicle. By excluding the traction battery from the control and powering of the preconditioning unit, the system may be retrofitted onto electric vehicles of different make with few modifications. Accessing the traction battery and the on-board charger is often difficult, as these are protected from external access by the manufacturer.

According to the first aspect of the present invention, a method for controlling the preconditioning of at least one traction battery of an electric vehicle is provided. The method comprises: charging an auxiliary battery from at least one power source; estimating the amount of auxiliary battery charge required to precondition the traction battery; obtaining charge rate information indicative of at least one charge rate affecting property of said at least one power source, wherein said at least one charge rate affecting property includes weather forecasts, driving schedule of the vehicle, time of day, day of week, week of year, historical charge rate data, and/or said at least one power source's output voltage, output current, and/or output power; estimating a charge rate of the auxiliary battery based on said charge rate information; comparing the estimated amount of charge required to precondition the traction battery with the estimated charge rate of the auxiliary battery and allocating an overcapacity thereof to the powering of at least one auxiliary system of the vehicle.

In the context of the present invention, estimating is taken to mean that a value of a given parameter is calculated, obtained, extrapolated, or inferred based on a set of supporting parameters. Obtaining is taken to mean that a value for a given parameter is received, retrieved, provided, determined, or otherwise made available.

By estimating and comparing the amount of charge required to precondition the traction battery with the charge rate of the auxiliary battery, the method allows for a more efficient utilization of the auxiliary battery charge. Previous methods for preconditioning the traction battery of an electric vehicle were not able to ensure that the traction battery was adequately preconditioned due to them not being able to determine a "safe" power consumption of auxiliary systems, leading to the auxiliary battery having a risk of not having sufficient charge to precondition the traction battery. The method and system of the present invention solves this by providing a predictive and intelligent system that uses actual vehicle traction battery information and charge rate information of the auxiliary battery to allocate the required charge for preconditioning the traction battery, and utilizing the remainder for the powering of auxiliary systems.

An auxiliary battery is a battery separate from the traction battery of an electric vehicle. The auxiliary battery is electrically coupled to and configured to power at least one auxiliary system, for example a preconditioning unit, a vehicle cabin climate control system, a seat heater, and/or a vehicle entertainment system. By having the traction battery preconditioning unit electrically coupled to an auxiliary battery, it is possible to retrofit an electric vehicle with a preconditioning system according to the present invention.

According to one example embodiment of the present invention, the method further comprises estimating the energy usage of at least one auxiliary system of said vehicle.

This may for example be done by measuring the depletion rate of the auxiliary battery when the at least one auxiliary system is powered thereby, or by accessing auxiliary system information indicative of a power consumption rate thereof. Alternatively, the power consumption rate of the auxiliary systems may be estimated by accessing information indicative of past power consumption rates for said at least one auxiliary system. Upon accessing such past power consumption rates, the method also obtains the conditions under which the at least one auxiliary system operated, such as ambient temperature in and outside the electric vehicle, number of people traveling in the vehicle, amount and frequency of stops and door-opening-events of the vehicle, sunlight intensity, and similar. By accessing past power consumption rate of the at least one auxiliary system, the method employs machine learning algorithms to predict a predicted power consumption rate of the at least one auxiliary system given the current conditions.

According to one example embodiment of the present invention, the method further comprises obtaining charge schedule information indicative of a scheduled or estimated time period during which the auxiliary battery will be charged from said at least one power source. The method further comprises determining an estimated auxiliary battery total charge based on the charge rate information and the charge schedule information, and comparing the estimated amount of charge required to precondition the traction battery with the estimated charge rate of the auxiliary battery and the estimated auxiliary battery total charge. Additionally, the method comprises allocating an overcapacity of the auxiliary battery to the powering of at least one auxiliary system of the vehicle.

According to one example embodiment of the present invention, the method further comprises obtaining traction battery information indicative of traction battery temperature, traction battery charge level, traction battery state of health, traction battery output voltage level, and estimating the auxiliary battery charge required to precondition the traction battery based on said traction battery information. This estimation may for example involves the method obtaining the traction battery information and, using machine learning algorithms in combination with current and past traction battery information, predict an auxiliary battery charge required to precondition the traction battery based on this.

According to one example embodiment of the present invention, said method further comprises obtaining the ambient temperature of the electric vehicle and estimating the auxiliary battery charge required to precondition the traction battery based on said traction battery information and said ambient temperature. The method does so by measuring the air surrounding the electric vehicle, at one or more points of measurement.

According to one example embodiment of the present invention, said at least one power source is a solar panel array. The amount of charge that may be received from a solar panel array is normally difficult to predict, and therefore using this charge to power the preconditioning of a traction battery would be difficult. However, the present invention solves this by obtaining charge rate information from the solar panel array and estimating a charge rate of the auxiliary battery based on the charge rate information. By having a charge rate estimation, the charge required to precondition the traction battery may accurately be accounted for when allocating auxiliary battery charge to the at least one auxiliary system.

The solar panel array may for example be coupled to a roof of the electric vehicle, using means for connecting retrofitted components to a vehicle. Thus, conventional electric vehicles may be retrofitted with a system according to the present invention.

Additionally or alternatively, the at least one power source may comprise a charge point of an electric grid. Thus, direct charging of the electric vehicle from an electric grid may also be utilized and accounted for by the method of the present invention.

According to one example embodiment of the present invention, said at least one auxiliary system comprises a vehicle cabin climate control system, a seat heater, and/or a vehicle entertainment system. By offloading the powering of these auxiliary systems from the traction battery (or another battery electrically coupled thereto), the total range of the electric vehicle is increased, the lifetime of the battery is improved, and the need for frequent recharge is reduced.

According to one example embodiment of the present invention, said method further comprises powering, by means of said auxiliary battery, a preconditioning unit thermally coupled to and configured to precondition said traction battery. The preconditioning unit may either be integrally fitted with the electric vehicle, or it may be connected thereto by retrofitting. Any one of a number of different preconditioning unit may be provided, such as an induction heater, a resistance heater, a thick film heating element, a heat pump, a PTC heater, or a high voltage heater.

According to one example embodiment of the present invention, said method further comprises powering, by means of said auxiliary battery, at least one auxiliary system, based on a determined overcapacity after the estimated auxiliary battery charge required to precondition the traction battery has been deducted from the estimated charge rate of the auxiliary battery.

According to a second aspect of the present invention, a non-transitory computer-readable storage medium is provided, said storage medium storing one or more programs configured to be executed by one or more processors of a control system, the one or more programs comprising instructions for performing the method according to any one of the preceding claims.

According to a third aspect of the present invention, a system is provided, said system comprising a communication unit configured to send and receive signals, and a control unit configured to:
charge an auxiliary battery from at least one power source, estimate the amount of auxiliary battery charge required to precondition the traction battery,
obtain charge rate information indicative of at least one charge rate affecting property of said at least one power source, wherein said at least one charge rate affecting property includes weather forecasts, driving schedule of the vehicle, time of day, day of week, week of year, historical charge rate data, and/or said at least one power source's output voltage, output current, and/or output power.
estimate a charge rate of the auxiliary battery based on said charge rate information,
estimate the energy usage of at least one auxiliary system of said vehicle,
compare the estimated energy usage of said at least one auxiliary system with the estimated charge rate of the auxiliary battery and allocate an overcapacity thereof to the powering of at least one auxiliary system of the vehicle.

According to one example embodiment of the present invention, said system further comprises a preconditioning unit thermally coupled to and configured to precondition said traction battery, an auxiliary battery and at least one power source electrically coupled thereto

Generally, all terms used in the description are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### BRIEF DESCRIPTION OF THE DRAWINGS

These and other features and advantages of the present invention will now be further clarified and described in more detail, with reference to the appended drawings showing different embodiments of a preconditioning system and a method according to the present invention.
Figure 1 is a schematic overview of the method of the present invention,
Figure 2 is a schematic overview of an electric vehicle comprising a preconditioning system according to the present invention.

### DETAILED DESCRIPTION OF EMBODIMENTS

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

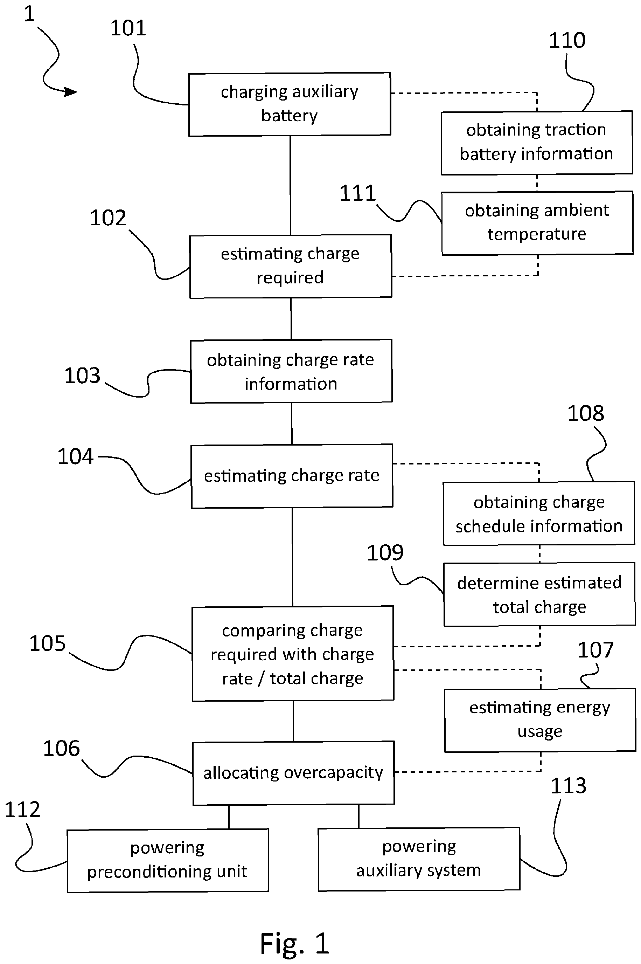

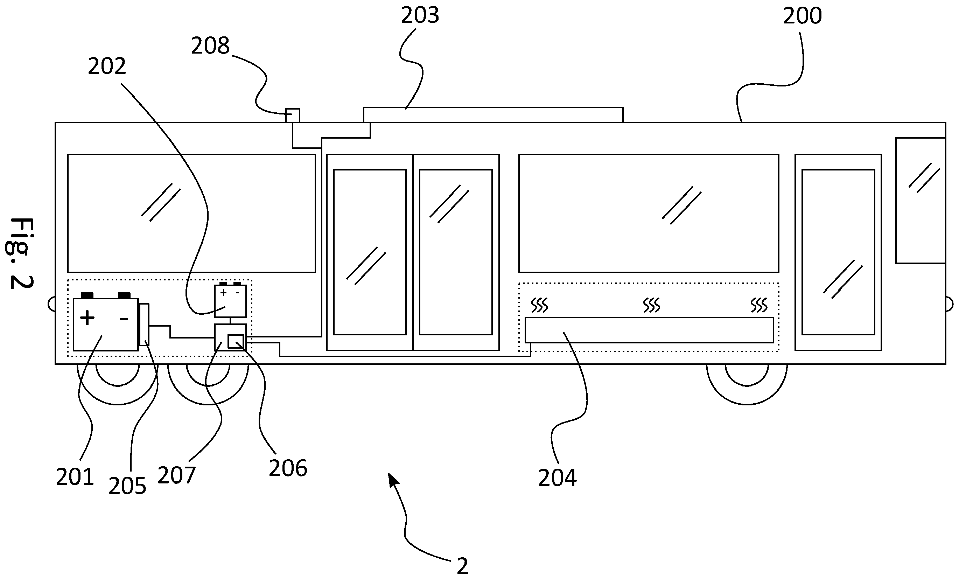

Figure 1 is a schematic overview of the method 1 of the present invention. The method controls the preconditioning of a traction battery 201 of an electric vehicle 200, as illustrated in Figure 2. The method 1 involves charging 101 an auxiliary battery 202 from a power source 203. In the embodiment illustrated in Figure 2, the power source 203 is a solar panel array. The illustrated embodiment of the method 1 further involves obtaining 110 traction battery information indicative of a temperature of the traction battery 201, as well as its charge level, state of health, and the output voltage level of the traction battery 201. This information may be obtained from a battery controller or an on-board charger of the electric vehicle 200. Alternatively, sensors arranged at, on or in the traction battery may be used to obtain this information. Additionally, the ambient temperature around the electric vehicle 200 and the traction battery 201 is obtained 111, thus allowing the method 1 to assess the impact of external conditions such as temperature on e.g. the preconditioning of the traction battery 201. The ambient temperature is obtained 111 by means of a temperature sensor 208 arranged on the electric vehicle 200.

The auxiliary battery charge required to precondition the traction battery 201 is then estimated 102 based on the traction battery information obtained. How the parameters indicated by the traction battery information affect the amount of auxiliary battery charge required to precondition the traction battery 201 is determined by means of machine learning algorithms fed with a combination of current and past traction battery information and charge data, and trained to determine correlations therebetween. The algorithm then predicts an auxiliary battery charge required to precondition the traction battery based on the traction battery information. Alternatively, the method may correlate the parameters indicated by the traction battery information with a table of values indicative of the effect different value parameters has on the amount of charge required to precondition the traction battery 201, and use this to determine the amount of charge required.

Furthermore, the method involves obtaining 103 charge rate information indicative of at least one charge rate affecting property of the power source 203. The at least one charge rate affecting property includes, for the illustrated embodiment, weather forecasts, driving schedule of the vehicle, time of day, day of week, week of year, historical charge rate data. Additionally, the charge rate affecting properties include the at least one power source's 203 output voltage, output current, and output power. The charge rate of the auxiliary battery 202 is then estimated 104 based on this charge rate information. The charge rate, combined with charge schedule information indicative of a scheduled or estimated time period during which the auxiliary battery 202 will be charged from the power source 203, is used to determine 109 an estimated auxiliary battery total charge. The charge schedule information is obtained 108 from a fleet management system, a traffic management system, or is estimated based on historical data on charge schedules of the electric vehicle 200.

The estimated amount of charge required to precondition the traction battery 201 is then compared 105 with the estimated charge rate of the auxiliary battery 202 and the estimated auxiliary battery total charge. Furthermore, the energy usage of at least one auxiliary system 204 of said vehicle 200 is estimated 107. By comparing the estimated auxiliary battery total charge with the estimated energy usage of the at least one auxiliary system 204 and the amount of battery charge required to precondition the traction battery 201, an overcapacity of the traction battery 201 may be determined. Thus, the at least one auxiliary system 204 may be powered by the auxiliary battery 202 without sacrificing the charge required to precondition the traction battery 201.

Finally, the method involves allocating 106 the determined overcapacity of the traction battery 201 to the powering of at least one auxiliary system 204 of the vehicle 200. The at least one auxiliary system 204 may be a vehicle cabin climate control system, a seat heater, a vehicle entertainment system, or similar. The auxiliary system 202 is then powered 113 by means of the auxiliary battery 202. The powering 113 of the at least one auxiliary system is restricted to the allocated overcapacity of the auxiliary battery 202, so as to not cause the preconditioning unit to not have enough power available to precondition the traction battery 201 of the electric vehicle 200. Finally, a preconditioning unit 205 is powered 112 by means of the auxiliary battery 202 to precondition the traction battery 201. The preconditioning unit is thermally coupled to the traction battery 201 and is configured to provide preconditioning temperature regulation thereto. By allowing the at least one auxiliary system 204 to only use the allocated amount of battery charge of the auxiliary batter 202, preconditioning capabilities are ensured. Thus, the method 1 of the present invention provides reliable preconditioning capabilities using the auxiliary batter 202 and the power source 203 coupled thereto, reducing the need for traditional fossil fuel preconditioning units.

Figure 2 is a schematic overview of an electric vehicle 200 comprising a preconditioning system 2 according to the present invention. The preconditioning system 2 is retrofitted onto an electric vehicle 200 and comprises a communication unit 206 that is configured to send and receive signals as part of the execution of the method 1 of the present invention. The communication unit 206 is connected to an on-board charger or traction battery management system of the electric vehicle 200, to an auxiliary battery 202, to at least one power source 203, which in the illustrated embodiment is a solar panel array, and to at least one sensor 208. Furthermore, the communication unit is connected to at least one auxiliary system 204, which in the illustrated embodiment is a cabin heater. The preconditioning system 2 further comprises a control unit 207 that is configured to control the charging of the auxiliary battery 202 from the power source 203. The control unit 207 is further configured to estimate the amount of auxiliary battery charge required to precondition the traction battery 201 of the electric vehicle 200, and to obtain charge rate information indicative of at least one charge rate affecting property of said at least one power source 203. The control unit 207 is further configured to estimate a charge rate of the auxiliary battery 202 based on the charge rate information, and to estimate the energy usage of at least one auxiliary system 204 of the electric vehicle 200. The control unit 207 then compares the estimated energy usage of the at least one auxiliary system 204 with the estimated charge rate of the auxiliary battery 202 and allocates an overcapacity thereof to the powering of at least one auxiliary system 204 of the vehicle 200. The preconditioning system 2 of the present invention further comprises a preconditioning unit 205 thermally coupled to and configured to precondition the traction battery 201 as described in relation to the method 1 of the present invention.

The person skilled in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A method (1) for controlling the electrically powered preconditioning of at least one traction battery (201) of an electric vehicle (200), the method (1) comprising:
charging (101) an auxiliary battery (202) from at least one power source (203),
estimating (102) the amount of auxiliary battery charge required to precondition the traction battery (201),
obtaining (103) charge rate information indicative of at least one charge rate affecting property of said at least one power source (203),
wherein said at least one charge rate affecting property includes weather forecasts, driving schedule of the vehicle, time of day, day of week, week of year, historical charge rate data, and/or said at least one power source's (203) output voltage, output current, and/or output power,
estimating (104) a charge rate of the auxiliary battery (202) based on said charge rate information,
comparing (105) the estimated amount of charge required to precondition the traction battery (201) with the estimated charge rate of the auxiliary battery (202) and allocating (106) an overcapacity thereof to the powering of at least one auxiliary system (204) of the vehicle (200).

2. The method (1) of claim 1, wherein the method (1) further comprises estimating (107) the energy usage of at least one auxiliary system (204) of said vehicle (200).

3. The method (1) of any one of the preceding claims, wherein the method (1) further comprises obtaining (108) charge schedule information indicative of a scheduled or estimated time period during which the auxiliary battery (202) will be charged from said at least one power source (203),
determining (109) an estimated auxiliary battery total charge based on said charge rate information and said charge schedule information, and
comparing (105) the estimated amount of charge required to precondition the traction battery (201) with the estimated charge rate of the auxiliary battery (202) and the estimated auxiliary battery total charge, and allocating (106) an overcapacity thereof to powering (113) at least one auxiliary system (204) of the vehicle (200).

4. The method (1) of any one of the preceding claims, wherein said method (1) further comprises obtaining (110) traction battery information indicative of traction battery temperature, traction battery charge level, traction battery state of health, traction battery output voltage level, and estimating (102) the auxiliary battery charge required to precondition the traction battery (201) based on said traction battery information.

5. The method (1) of claim 4, wherein said method (1) further comprises obtaining (111) the ambient temperature of the electric vehicle (200) and estimating (102) the auxiliary battery charge required to precondition the traction battery (201) based on said traction battery information and said ambient temperature.

6. The method (1) of any one of the preceding claims, wherein said at least one power source (203) is a solar panel array.

7. The method (1) of any one of the preceding claims, wherein said at least one auxiliary system (204) comprises a vehicle cabin climate control system, a seat heater, and/or a vehicle entertainment system.

8. The method (1) of any one of the preceding claims, wherein said method (1) further comprises powering (112), by means of said auxiliary battery (202), a preconditioning unit (205) thermally coupled to and configured to precondition said traction battery (201).

9. The method (1) of any one of the preceding claims, wherein said method (1) further comprises powering (113), by means of said auxiliary battery (202), at least one auxiliary system (204), based on a determined overcapacity after the estimated auxiliary battery charge required to precondition the traction battery (201) has been deducted from the estimated charge rate of the auxiliary battery (202).

10. A non-transitory computer-readable storage medium storing one or more programs configured to be executed by one or more processors of a control system, the one or more programs comprising instructions for performing the method (1) of any one of the preceding claims.

11. A preconditioning system (2) comprising a communication unit (206) configured to send and receive signals, and a control unit (207) configured to:
charge an auxiliary battery (202) from at least one power source (203), estimate the amount of auxiliary battery charge required to precondition a traction battery (201) of an electric vehicle (200), obtain charge rate information indicative of at least one charge rate affecting property of said at least one power source (203), wherein said at least one charge rate affecting property includes weather forecasts, driving schedule of the vehicle, time of day, day of week, week of year, historical charge rate data, and/or said at least one power source's output voltage, output current, and/or output power.
estimate a charge rate of the auxiliary battery (202) based on said charge rate information,
estimate the energy usage of at least one auxiliary system (204) of said vehicle (200),
compare the estimated energy usage of said at least one auxiliary system (204) with the estimated charge rate of the auxiliary battery (202) and allocate an overcapacity thereof to the powering of at least one auxiliary system (204) of the vehicle (200).

12. The preconditioning system (2) of claim 11, wherein said system (2) further comprises a preconditioning unit (205) thermally coupled to and configured to precondition said traction battery (201), an auxiliary battery (202) and at least one power source (203) electrically coupled thereto.

13. The preconditioning system (2) of any one of claims 11 or 12, wherein said system further comprises a sensor (208) configured to obtain the ambient temperature of the electric vehicle (200).
